# EUROPÄISCHE PATENTSCHRIFT

(11) **EP 0 589 354 B1**
(45) Veröffentlichungstag und Bekanntmachung des Hinweises auf die Patenterteilung: **02.04.1997**
(21) Anmeldenummer: 93114905.8
(22) Anmeldetag: 16.09.1993
(51) Int. Cl.: C08L 59/02, C08K 13/04, C08L 59/00, C08K 3/34, C08K 5/20

(54) **Füllstoffhaltige Polyoxymethylenformmassen**
Polyoxymethylene composition containing filler
Compositions de polyoxyméthylène contenant des charges

(30) Priorität: 25.09.1992 DE 4232121
(43) Veröffentlichungstag der Anmeldung: 30.03.1994
(73) Patentinhaber: BASF Aktiengesellschaft, 67063 Ludwigshafen (DE)
(72) Erfinder: Kielhorn-Bayer, Sabine, Dr., D-6701 Maxdorf (DE); Deckers, Andreas, Dr., D-6700 Ludwigshafen (DE); Saenger, Dietrich, Dr., D-6710 Frankenthal (DE)

(56) Entgegenhaltungen:
- EP-A- 0 110 108
- DE-A- 3 628 561
- PATENT ABSTRACTS OF JAPAN vol. 7, no. 39 (C-151) 17. Februar 1983 & JP-A-57 192 448 (MITSUBISHI GAS KKK) 26. November 1982
- DATENBANK: "Chemical Abstracts" (Datenanbieter: STN), "access number: 111: 59 017", Colombus, Ohio, USA; & JP-A-01 054 053 (ASAHI KKKK) 01. März 1989

## Beschreibung

Die Erfindung betrifft
Thermoplastische Formmassen, enthaltend
- A) 40 bis 98 Gew.%: eines Polyoxymethylenhomo- oder Copolymerisats
- B) 0,01 bis 5 Gew.%: mindestens eines Esters oder Amids gesättigter oder ungesättigter aliphatischer Carbonsäuren mit 10 bis 40 C-Atomen mit aliphatischen gesättigten Alkoholen oder Aminen mit 2 bis 40 C-Atomen,
- C) 0,01 bis 5 Gew.%: eines Erdalkalisilikats,
- D) 1 bis 50 Gew.%: faser- oder teilchenförmige Füllstoffe oder deren Mischungen und
- E) 0 bis 50 Gew.%: eines schlagzähmodifizierenden Polymeren.

Darüber hinaus betrifft die Erfindung die Verwendung derartiger Formmassen zur Herstellung von Fasern, Folien und Formkörpern jeglicher Art und die so erhaltenen Formkörper.

Polyoxymethylen-homo oder -copolymerisate sind seit langem bekannt. Die Polymerisate zeichnen sich durch eine Anzahl ausgezeichneter Eigenschaften aus, so daß sie für die verschiedensten technischen Anwendungen geeignet sind. Dennoch hat es nicht an Versuchen gefehlt, Mittel zur Verbesserung der Verarbeitbarkeit, z.B. der Fließfähigkeit und/oder zur Verbesserung der mechanischen Eigenschaften zu finden. Die bei der Verarbeitung zu Formkörpern bestehende Entformungskraft sollte möglichst gering sein und wurde bislang durch Zugabe unterschiedlicher Schmiermittel zu verbessern versucht.

So ist aus der US-A 2946763 die Zugabe von perflourierten Polymeren z.B. auf Basis von Tetrafluorethylen oder Hexafluorpropylen bekannt.

Aus der DE-A 3 628 561 sind verstärkte POM-Massen bekannt, welche Magnesiumsilikat in Kombination mit einem Alkoximethylmelamin zur Verbesserung der Thermostabilität enthalten.

Alkylendifettsäureamide in Kombination mit anorganischen Verbindungen wie Calciumfluorid sind aus der JP-A 57/192 448 bekannt, welche im POM kürzere Verarbeitungszyklen im Spritzguß bewirken.

Aus der EP-A 110 108 ist eine Schmiermittelkombination für POM aus organometallischen Salzen, Fettsäureestern und Polyethylenglycol bekannt.

Aus der DE-A 2262788 ist die Zugabe von Fettsäureestern zu POM bekannt.

Trotz dieser Maßnahmen zeigen bekannte Polyoxymethylenformmassen eine nicht zufriedenstellende Verarbeitung zu Formkörpern, da bekannte Additive zu Ablagerungen am Formwerkzeug oder zu einer Verschlechterung der Entformbarkeit beitragen und/oder beim späteren Gebrauch der Formkörper zu Verfärbungen oder Verminderung der mechanischen Eigenschaften führen.

Der vorliegenden Erfindung lag daher die Aufgabe zugrunde, Polyoxymethylenformmassen zur Verfügung zu stellen, die eine geringe Entformungskraft bei der Verarbeitung sowie einen geringen Gleitreibungskoeffizienten aufweisen, wobei die guten mechanischen Eigenschaften weitestgehend erhalten bleiben sollen.

Diese Aufgabe wurde durch die eingangs definierten thermoplastischen Polyoxymethylenformmassen gemäß Anspruch 1 gelöst.

Bevorzugte Massen dieser Art sind den Unteransprüchen zu entnehmen.

Als Komponente A) enthalten die erfindungsgemäßen Formmassen 40 bis 98, vorzugsweise 55 bis 94 Gew.-% und insbesondere 60 bis 80 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O- noch bis zu 50, vorzugsweise 0,1 bis 20 und insbesondere 0,3 bis 10 mol-% an wiederkehrenden Einheiten 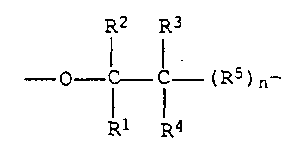 wobei R¹ bis R⁴ unabhängig voneinander ein Wasserstofatom, eine C₁- bis C₄-Alkylgruppe oder eine halogensubstituierte Alkylgruppe mit 1 bis 4 C-Atomen und R5 eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 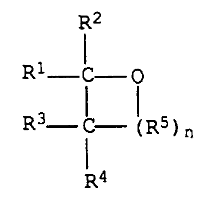 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel 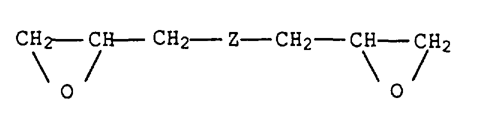 wobei Z eine chemische Bindung, -O-, -ORO- (R= C₁- bis C₈-Alkylen oder C₂- bis C₈-Cycloalkylen) ist, hergestellt werden.

Bevorzugte Monomere dieser Art sind Ethylendiglycid, Diglycidyl ether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) Mw im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente B enthalten die erfindungsgemäßen Formmassen 0,01 bis 5, vorzugsweise 0,05 bis 3 und insbesondere 0,1 bis 2 Gew.-% mindestens eines Esters oder Amids gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin bevorzugt ist.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Ethylendiamindistearat, Glycerinmonopalmitat, Glycerintrilaurat, Glycerinmonobehenat.

Es können auch Mischungen verschiedener Ester oder Amide oder Ester mit Amiden in Kombination eingesetzt werden, wobei das Mischungsverhältnis beliebig ist.

Als Komponente C) enthalten die erfindungsgemäßen Polyoximethylen-Formmassen 0,01 bis 5,0 Gew.-%, vorzugsweise 0,05 bis 3 Gew.-% und insbesondere 0,05 bis 1 Gew.-%, bezogen auf das Gesamtgewicht der Formmassen eines oder mehrerer Erdalkalisilikate. Als Erdalkalimetalle zur Bildung der Silikate haben sich vorzugsweise Calcium und insbesondere Magnesium vorzüglich bewährt. Anwendung finden zweckmäßigerweise Calciumsilikat und vorzugsweise Magnesiumsilikat, wobei als Erdalkalisilikate, insbesondere solche bevorzugt sind, die durch die Formel

Me · x SiO₂ · n H₂O

beschrieben werden, in der bedeuten
- Me: ein Erdalkalimetall, vorzugsweise Calcium oder insbesondere Magnesium,
- x: eine Zahl von 1,4 bis 10, vorzugsweise 1,4 bis 6 und
- n: eine Zahl gleich oder größer als 0, vorzugsweise 0 bis 8.

Die Verbindungen C) werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Vorzugsweise Anwendung finden Calcium- und Magnesiumsilikate, die beispielsweise durch die folgenden Kenndaten näher spezifiziert werden können:

Calcium- bzw. Magnesiumsilikat:
Gehalt an CaO bzw. MgO: 4 bis 32 Gew.-%, vorzugsweise 8 bis 30 Gew.-% und insbesondere 12 bis 25 Gew.-%,
Verhältnis SiO₂ : CaO bzw. SiO₂ : MgO (mol/mol): 1,4 bis 10,
vorzugsweise 1,4 bis 6 und insbesondere 1,5 bis 4,
Schüttgewicht: 10 bis 80 g/100 ml, vorzugsweise 10 bis 40 g/100 ml und durchschnittliche Korngröße: kleiner als 100 µm,
vorzugsweise kleiner als 50 µ.

Als Komponente D) enthalten die erfindungsgemäßen Formmassen 1 bis 50, vorzugsweise 5 bis 40 Gew.-% und insbesondere 15 bis 30 Gew.-% eines faser- oder teilchenförmigen Füllstoffs oder deren Mischungen.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Calciumcarbonat, Glaskugeln, Quarzmehl, Si- und Bornitrid oder Mischungen dieser Füllstoffe.

Als Komponente E) enthalten die erfindungsgemäßen thermoplastischen Formmassen 0 bis 50, vorzugsweise 0 bis 40 Gew.-% eines schlagzäh modifizierenden Polymeren (im folgenden auch als kautschukelastisches Polymerisat oder Elastomer bezeichnet).

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/ 100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 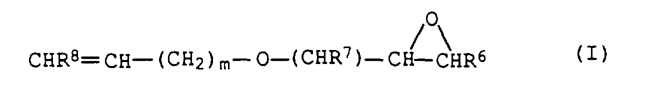 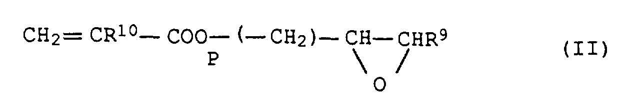 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen, insbesondere 0,3 bis 20 Gew.-% Glycidylacrylat und/oder
- 0 bis 40,: insbesondere 0,1 bis 20 Gew.-% Glycidylmethacrylat, und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel 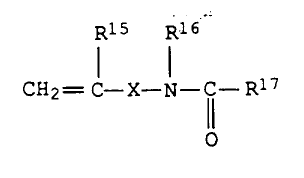 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR₁₈
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

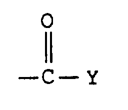

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente E) bis zu 5 Gew.-%, vorzugsweise nicht mehr als 3 Gew.-%, bezogen auf E).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)-acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere E) können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen DesmopanI (Bayer AG) oder ElastollanI (Elastogran Polyurethane GmbH) erhältlich.

Selbstverständlich können auch Mischungen der vorstehend aufgeführten Kautschuktypen eingesetzt werden.

Neben den Komponenten A), B), C) und D) sowie ggf. E) können die erfindungsgemäßen Formmassen noch übliche Zusatzstoffe und Verarbeitungshilfsmittel enthalten. Nur beispielhaft seien hier Zusätze zum Abfangen von Formaldehyd (Formaldehyd-Scavenger), Weichmacher, Schmiermittel, Antioxidantien, Haftvermittler, Lichtstabilisatoren und Pigmente genannt. Der Anteil solcher Zusätze liegt im allgemeinen im Bereich von 0,001 bis 5 Gew.-%.

Als Nukleierungsmittel können die erfindungsgemäßen Formmassen gemäß einer bevorzugten Ausführungsform ein Malein-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch ein ausgewogenes Eigenschaftsspektrum, insbesondere eine helle Eigenfarbe und gute mechanischen Eigenschaften aus, wobei die Verarbeitung zu Formkörpern durch geringe Gleitreibung und geringe aufzuwendende Entformungskraft wesentlich verbessert ist. Demzufolge eignen sie sich zur Herstellung von Formkörpern jeglicher Art.

### Beispiele

Es wurden folgende Komponenten eingesetzt:

### Komponente A:

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen Schmelzindex von 9 g/10 min (190°C, 2,16 kg, nach DIN 53 735).

### Komponente B/1:

Pentaerythrittetrastearat (Loxiol® VP 861 der Firma Henkel)

### Komponente B/2:

Ethylendiamindistearat (Synthewax® der Firma Comiel, Italien)

### Komponente B/3:

Glycerindistearat (Loxiol® VP 1206 der Firma Henkel)

### Komponente C:

Synthetisches Mg-Silicat (Ambosol® der Firma Société Nobel, Bozel, Puteaux) mit folgenden Eigenschaften:

| | |
|---|---|
| Gehalt an MgO: | ≥ 14,8 Gew.-% |
| Gehalt an SiO₂: | ≥ 59 Gew.-% |
| Verhältnis SiO₂ : MgO: | 2,7 mol/mol |
| Schüttdichte: | 20 bis 30 g/100 ml |
| Glühverlust: | < 25 Gew.-% |

### Komponente D:

Glasfasern mit einem mittleren Durchmesser von 10 µm.

### Komponente E:

Ein teilmethyloliertes u. mit Methanol verethertes Melamin-Formaldehyd Harz (partiell alkyliert) mit 68,3 % nicht flüchtigen Anteilen (Molverhältnis Melamin: CH₂O : Methoxyl 1 : 3,28 : 1,79).

Zur Herstellung der Formmassen wurde die Komponente A mit den in der Tabelle angegebenen Mengen der Komponenten B-C in einem Trockenmischer bei einer Temperatur von 23°C gemischt. Die so erhaltene Mischung wurde in einem Doppelschneckenextruder mit Entgasungsvorrichtung (ZSK 28 der Firma Werner & Pfleiderer) eingebracht, bei 230°C unter Zugabe der Komponente D) und E) homogenisiert, entgast und das homogenisierte Gemisch durch eine Düse als Strang ausgepreßt und granuliert.

Zur Prüfung der Thermostabilität wurden bestimmt:
- GV_{N2}:: Der Gewichtsverlust in Prozent einer Probe aus 2 g Granulat bei 2-stündigem Erhitzen auf 220°C unter Stickstoff,
- GV_{Luft}:: Gewichtsverlust in Prozent einer Probe aus 1 g Granulat bei 2-stündigem Erhitzen auf 220°C unter Luft.

Die Entformbarkeit wurde mittels einer Entformungskraftmessung ermittelt. An zylinderförmigen Spritzlingen (Entformungshülsen) der Abmessung 86 * 60 mm und einer Wanddicke von 2 mm wurde bei einer Spritzgußmaschine mit rollengelagertem Auswerferantrieb die Reibung zwischen Probekörper und Kern in der Anfangsphase des Entformungsvorgangs erfaßt.

Die Werkzeugoberflächentemperatur betrug 80°C.

Folgende mechanischen Eigenschaften wurden gemessen:
MFI (190°C; 2,16 kg) nach DIN 53735,
E-Modul nach DIN 53457,
Reißdehnung nach DIN 53455,
Lochkerbschlagzähigkeit nach DIN 53753,
Izod-Kerbschlagzähigkeit nach ISO 180.

Die Ergebnisse der Messungen und die Zusammensetzung der Formmassen sind den Tabellen zu entnehmen.

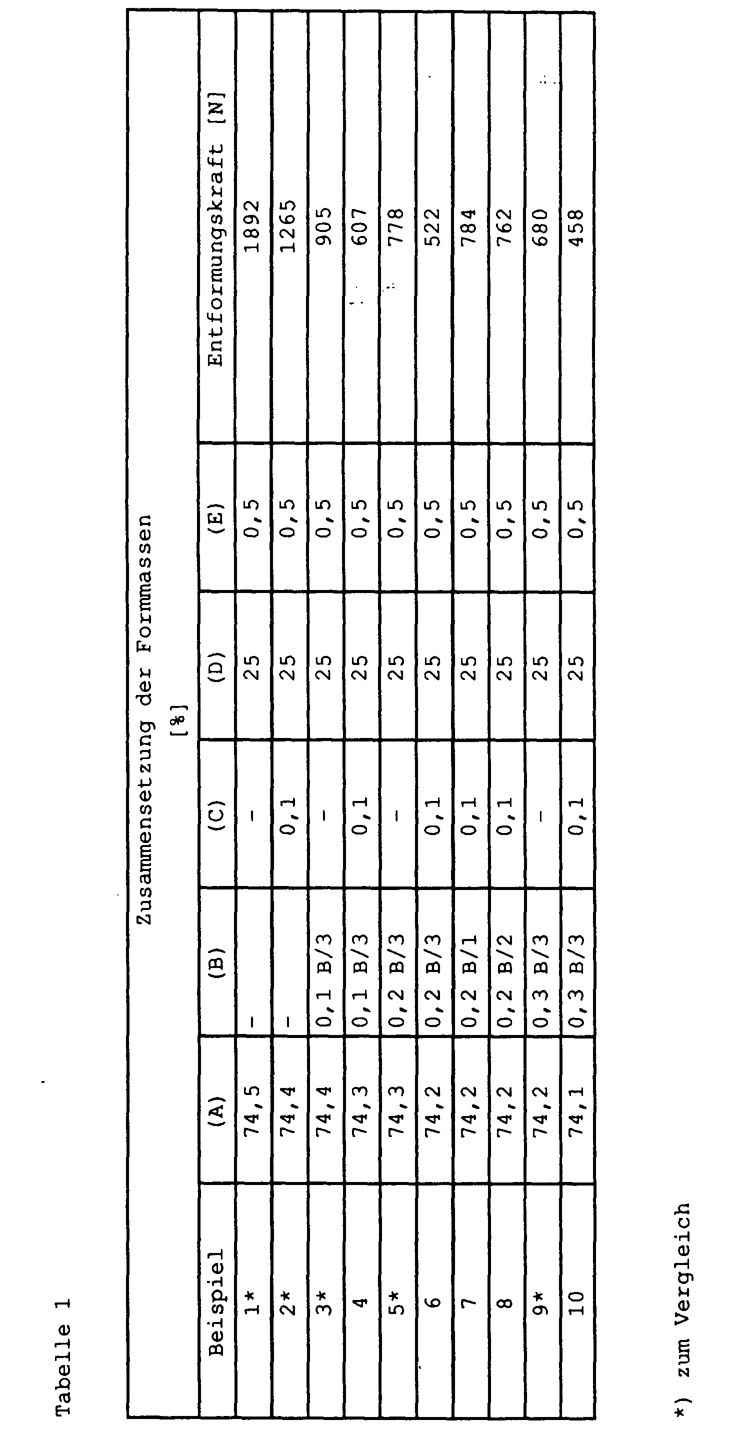

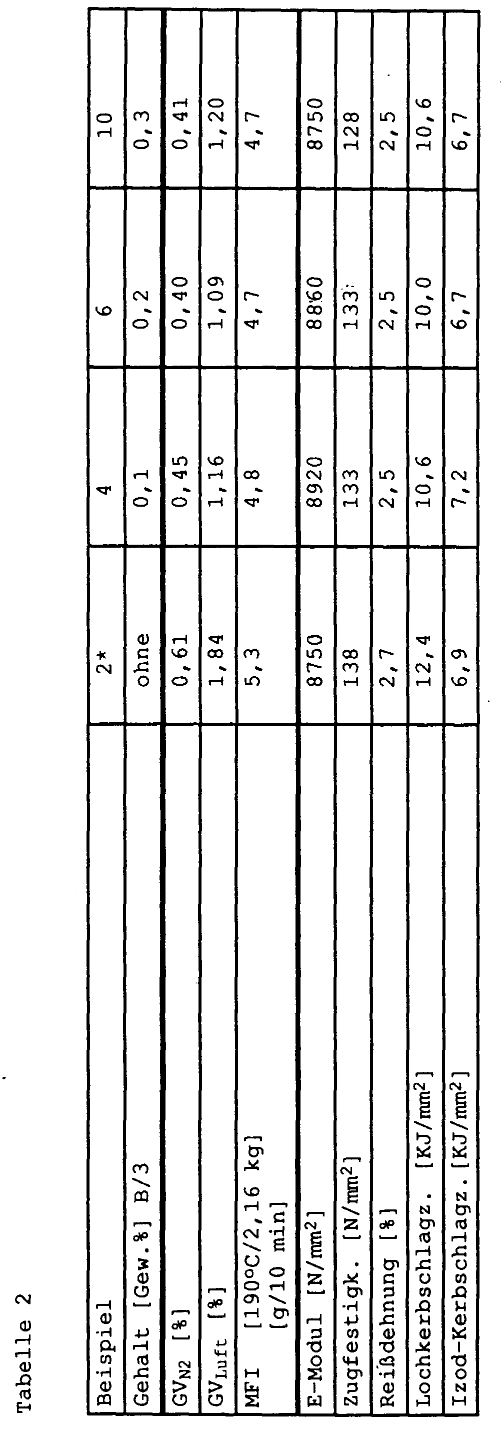

## Patentansprüche

1. Thermoplastische Formmassen, enthaltend
A) 40 bis 98 Gew.% eines Polyoxymethylenhomo- oder Copolymerisats
B) 0,01 bis 5 Gew.% mindestens eines Esters oder Amids gesättigter oder ungesättigter aliphatischer Carbonsäuren mit 10 bis 40 C-Atomen mit aliphatischen gesättigten Alkoholen oder Aminen mit 2 bis 40 C-Atomen,
C) 0,01 bis 5 Gew.% eines Erdalkalisilikats,
D) 1 bis 50 Gew.% faser- oder teilchenförmige Füllstoffe oder deren Mischungen und
E) 0 bis 50 Gew.% eines schlagzähmodifizierenden Polymeren.

2. Thermoplastische Formmassen nach Anspruch 1, enthaltend
A) 55 - 94 Gew.%
B) 0,05 - 3 Gew.%
C) 0,05 - 3 Gew.%
D) 5 - 40 Gew.%

3. Thermoplastische Formmassen nach den Ansprüchen 1 oder 2, in denen die Komponente B) ein Ester einer aliphatischen gesättigten oder ungesättigten Carbonsäure mit 10 bis 40 C-Atomen mit Glycerin ist.

4. Thermoplastische Formmassen nach den Ansprüchen 1 bis 3, in denen die Komponente B) Glycerindistearat ist.

5. Verwendung der thermoplastischen Formmassen gemäß den Ansprüchen 1 bis 4 zur Herstellung von Fasern, Folien und Formkörpern.

6. Formkörper, hergestellt aus den thermoplastischen Formmassen, gemäß den Ansprüchen 1 bis 4.

## Claims

1. A thermoplastic molding material containing
A) from 40 to 98% by weight of a polyoxymethylene homo- or copolymer,
B) from 0.01 to 5% by weight of at least one ester or amide of saturated or unsaturated aliphatic carboxylic acids of 10 to 40 carbon atoms with aliphatic saturated alcohols or amines of 2 to 40 carbon atoms,
C) from 0.01 to 5% by weight of an alkaline earth metal silicate,
D) from 1 to 50% by weight of fibrous or particulate fillers or of a mixture thereof and
E) from 0 to 50% by weight of a polymeric impact modifier.

2. A thermoplastic molding material as claimed in claim 1, containing
A) 55-94% by weight
B) 0.05-3% by weight
C) 0.05-3% by weight
D) 5-40% by weight.

3. A thermoplastic molding material as claimed in claim 1 or 2, in which the component B) is an ester of an aliphatic saturated or unsaturated carboxylic acid of 10 to 40 carbon atoms with glycerol.

4. A thermoplastic molding material as claimed in any of claims 1 to 3, in which component B) is glyceryl distearate.

5. The use of a thermoplastic molding material as claimed in any of claims 1 to 4 for the production of fibers, films and moldings.

6. A molding produced from a thermoplastic molding material as claimed in any of claims 1 to 4.

## Revendications

1. Masses à mouler thermoplastiques contenant
A) de 40 à 98% en poids d'un homo- ou d'un copolymère de polyoxyméthylène,
B) de 0,01 à 5% en poids d'au moins un ester ou un amide d'acides carboxyliques aliphatiques saturés ou insaturés contenant de 10 à 40 atomes de carbone avec des alcools ou des amines saturés aliphatiques contenant de 2 à 40 atomes de carbone,
C) de 0,01 à 5% en poids d'un silicate de métal alcalino-terreux,
D) de 1 à 50% en poids de substances de remplissage de forme fibreuse ou particulaire, ou encore de leurs mélanges, et
E) de 0 à 50% en poids d'un polymère modifié à résistance élevée aux chocs.

2. Masses à mouler thermoplastiques selon la revendication 1, contenant
A) à concurrence de 55 à 94% en poids
B) à concurrence de 0,05 à 3% en poids
C) à concurrence de 0,05 à 3% en poids
D) à concurrence de 5 à 40% en poids.

3. Masses à mouler thermoplastiques selon les revendications 1 ou 2, dans lesquelles le composant B) est un ester d'un acide carboxylique aliphatique saturé ou insaturé contenant de 10 à 40 atomes de carbone avec le glycérol.

4. Masses à mouler thermoplastiques selon les revendications 1 à 3, dans lesquelles le composant B) est le distéarate de glycérol.

5. Utilisation des masses à mouler thermoplastiques selon les revendications 1 à 4 pour la fabrication de fibres, de feuilles et de corps moulés.

6. Corps moulés fabriqués à partir des masses à mouler thermoplastiques selon les revendications 1 à 4.
